# EUROPÄISCHE PATENTSCHRIFT

(11) **EP 3 112 916 B1**
(45) Veröffentlichungstag und Bekanntmachung des Hinweises auf die Patenterteilung: **05.08.2020**
(21) Anmeldenummer: 16176107.7
(22) Anmeldetag: 24.06.2016
(51) Int. Cl.: G02B 21/00, G02B 27/14, G02B 27/10, G02B 21/06, H04N 9/31

(54) **VORRICHTUNG UND VERFAHREN ZUR LICHTMODULATION**
DEVICE AND METHOD FOR LIGHT MODULATION
DISPOSITIF ET PROCÉDÉ DESTINÉS À LA MODULATION DE LUMIÈRE

(30) Priorität: 29.06.2015 DE 102015110449
(43) Veröffentlichungstag der Anmeldung: 04.01.2017
(73) Patentinhaber: Carl Zeiss Microscopy GmbH, 07745 Jena (DE); Carl Zeiss AG, 73447 Oberkochen (DE)
(72) Erfinder: WALD, Matthias, 07751 Jena (DE); HUSEMANN, Christoph, 07747 Jena (DE)
(74) Vertreter: Sticht, Andreas

(56) Entgegenhaltungen:
- WO-A1-99/20054
- WO-A1-2007/046710
- DE-A1- 4 431 749
- US-A- 5 300 942
- US-A1- 2007 058 182
- US-A1- 2014 368 904

## Beschreibung

Die vorliegende Anmeldung betrifft Vorrichtungen und Verfahren zur Lichtmodulation. Insbesondere betrifft die vorliegende Anmeldung derartige Verfahren und Vorrichtungen, bei welchen verschiedene Spektralanteile von Licht getrennt moduliert werden können.

Lichtmodulatoren dienen allgemein dazu, einen einfallenden Lichtstrahl zu modulieren. Eine derartige Modulation kann beispielsweise hinsichtlich einer Phase des Lichtstrahles und/oder hinsichtlich einer Intensität (Amplitude) des Lichtstrahles erfolgen. Bei manchen Anwendungen, beispielsweise zur Strahlformung, ist es wünschenswert, verschiedene Spektralanteile eines Lichtstrahls (beispielsweise rote, grüne und blaue Spektralanteile) getrennt voneinander modulieren zu können.

Die US 5,300,942 A, WO 99/20054 A1 oder DE 44 317 49 A1 offenbaren jeweils eine Vorrichtung gemäß dem Oberbegriff des Anspruchs 1. Ähnliche Vorrichtungen sind auch in der US 2007/058182 A1 oder der WO 2007/046710 A1 bekannt, wobei hier separate räumliche Lichtmodulatoren für verschiedene Farben verwendet werden.

Es ist daher eine Aufgabe der vorliegenden Anmeldung, Modulationseinrichtungen und Verfahren bereitzustellen, mit welchen eine derartige getrennte Modulation verschiedener Spektralanteile auf einfache und effektive Weise möglich ist.

Diese Aufgabe wird gelöst durch eine Modulationseinrichtung nach Anspruch 1 sowie durch ein Verfahren nach Anspruch 14. Die Unteransprüche definieren weitere Ausführungsformen.

Gemäß einem ersten Aspekt wird eine Modulationseinrichtung zum Modulieren eines Lichtstrahls bereitgestellt, umfassend: einen Spektralteiler zum Aufteilen eines Eingangsstrahls in mindestens zwei Teillichtstrahlen mit unterschiedlichen Spektralbereichen, einen räumlichen Lichtmodulator, eine Optik zum Lenken der mindestens zwei Teillichtstrahlen zu unterschiedlichen Orten des räumlichen Lichtmodulators, wobei der räumliche Lichtmodulator eingerichtet ist, die mindestens zwei Teillichtstrahlen zu modulieren, wobei die Optik weiter zum Lenken der mindestens zwei Teillichtstrahlen nach der Modulation von dem räumlichen Lichtmodulator zu dem Spektralteiler eingerichtet ist, wobei der Spektralteiler weiter eingerichtet ist, die mindestens zwei Teillichtstrahlen nach der Modulation zu einem Ausgangslichtstrahl zu vereinigen.

Somit kann durch Verwendung eines einzigen räumlichen Lichtmodulators eine einfache Modulation verschiedener spektraler Anteile eines Lichtstrahls erfolgen. Der Spektralteiler kann eine einzige Spektralteilerkomponente aufweisen, die dann sowohl zum Aufteilen in Teillichtstrahlen als auch zum Vereinigen der Teillichtstrahlen dient. Es kann aber auch eine Anordnung mehrerer hintereinandergeschalteter Spektralteilerkomponenten verwendet werden, z.B. zur Erzeugung einer größeren Anzahl von Teillichtstrahlen, wobei dann die Anordnung sowohl zum Aufteilen in Teillichtstrahlen als auch zum Vereinigen der Teillichtstrahlen dient.

Der räumliche Lichtmodulator kann eingerichtet sein, Amplitude und/oder Phase für die mindestens zwei Teillichtstrahlen unabhängig voneinander zu modulieren.

Die Modulationseinrichtung kann weiter eine Komponente, insbesondere eine separate Komponente (ohne andere Funktion) zum Angleichen optischer Weglängen der mindestens zwei Teillichtstrahlen umfassen.

Die Modulationseinrichtung kann derart eingerichtet sein, dass optische Weglängen für die mindestens zwei Teillichtstrahlen ohne Bereitstellung von (insbesondere separaten) Komponenten zum Ausgleich optischer Weglängen gleich sind.

Durch einen derartigen Aufbau ist beispielsweise kein separates Element zum Angleichen von Lichtwegen nötig, und/oder ein kompakter Aufbau kann erreicht werden.

Die Lichtwege der Teillichtstrahlen können funktional identisch sein, das heißt, es werden von den Teillichtstrahlen gleiche Strecken in gleichen Materialien (z.B. Glas, Luft etc.) durchlaufen werden, was zu gleichen optischen Weglängen ohne weitere Komponenten führt, und die Teillichtstrahlen von gleichen optischen Komponenten (z.B. Spiegeln) beeinflusst werden. Ein Unterschied entsteht hier also lediglich durch eine möglicherweise unterschiedliche Modulation der Teillichtstrahlen durch den räumlichen Lichtmodulator.

Die Optik kann Spiegel umfassen, welche bezüglich einer Achse durch den Spektralteiler und den räumlichen Lichtmodulator im Wesentlichen symmetrisch angeordnet sind. Im Wesentlichen symmetrisch kann dabei bedeuten, dass der Abstand zueinander im Wesentlichen symmetrische Spiegel von der Achse sich um nicht mehr als 20%, z.B. um nicht mehr als 10%, unterscheidet, und/oder die Ausrichtung der Spiegel mit einer Abweichung von nicht mehr als +/- 15°, z.B. nicht mehr als +/- 10°, zueinander symmetrisch ist. Dabei bezieht sich die Symmetrieeigenschaft insbesondere auf optisch genutzte Teile der Spiegel. Bei anderen Ausführungsbeispielen kann "im Wesentlichen symmetrisch" "innerhalb der Fertigungstoleranzen symmetrisch" bedeuten. Bei anderen Ausführungsbeispielen können auch unsymmetrische Spiegelanordnungen verwendet werden.

Mindestens zwei der mindestens zwei Teillichtstrahlen durchlaufen die Modulationseinrichtung in zueinander entgegengesetzten Richtungen.

Die Optik kann einen ersten Spiegel und einen zweiten Spiegel umfassen, und die mindestens zwei Teillichtstrahlen können einen ersten Teillichtstrahl und einen zweiten Teillichtstrahl umfassen, wobei der erste Spiegel angeordnet ist, den ersten Teillichtstrahl von dem Spektralteiler zu dem räumlichen Lichtmodulator zu lenken und den zweiten Teillichtstrahl nach der Modulation von dem räumlichen Lichtmodulator zu dem Spektralteiler zu lenken, wobei der zweite Spiegel angeordnet ist, den zweiten Teillichtstrahl von dem Spektralteiler zu dem räumlichen Lichtmodulator zu lenken und den ersten Teillichtstrahl nach der Modulation von dem räumlichen Lichtmodulator zu dem Spektralteiler zu lenken.

Die Optik kann derart eingerichtet sein, dass ein Einfallswinkel der mindestens zwei Teillichtstrahlen auf dem räumlichen Lichtmodulator und/oder auf dem Spektralteiler kleiner als 20° ist.

Der Einfallswinkel kann insbesondere kleiner als 10° sein.

Derartige geringe Einfallswinkel können insbesondere dann vorteilhaft sein, wenn eine hohe Effizienz des Spektralteilers nötig ist, beispielsweise bei geringer Signalstärke.

Der Spektralteiler kann einen dichroiden Spektralteiler umfassen.

Der Spektralteiler kann dabei auf einer Seite eine dichroide Schicht aufweisen, die Licht in einem Spektralbereich reflektiert und Licht außerhalb des Spektralbereichs durchlässt.

Der Spektralteiler kann auch eine erste dichroide Schicht auf einer ersten Seite und eine zweite dichroide Schicht auf einer zweiten Seite aufweisen, wobei die erste dichroide Schicht in einem anderen Spektralbereich reflektiert als die zweite dichroide Schicht.

Zudem wird eine Beleuchtungseinrichtung zum Beleuchten eines Objekts bereitgestellt, umfassend eine Lichtquelle und eine Modulationseinrichtung wie oben beschrieben.

Auch wird eine Mikroskopvorrichtung mit einer Modulationseinrichtung wie oben beschrieben und/oder einer Beleuchtungseinrichtung wie oben beschrieben bereitgestellt.

Gemäß einem zweiten Aspekt wird ein Verfahren zur Lichtmodulation bereitgestellt, umfassend: Teilen von Licht in mehrere Teillichtstrahlen mit unterschiedlichen Spektralanteilen, Lenken der Teillichtstrahlen zu verschiedenen Orten auf einem räumlichen Lichtmodulator, unabhängiges Modulieren der Teillichtstrahlen durch den räumlichen Lichtmodulator, und Vereinigen der modulierten Teillichtstrahlen.

Das Lenken der Teillichtstrahlen und das Vereinigen der Teillichtstrahlen erfolgt dabei derart, dass zumindest zwei der Teillichtstrahlen gegenläufige Lichtwege zurücklegen.

Das Verfahren kann mit einer Modulationseinrichtung wie oben beschrieben durchgeführt werden.

Zur weiteren Erläuterung werden im Folgenden verschiedene Ausführungsbeispiele der Erfindung unter Bezugnahme auf die beigefügten Zeichnungen näher erläutert. Es zeigen:
Figur 1 ein Blockdiagramm einer Lichtmodulationseinrichtung gemäß einem Ausführungsbeispiel,
Figur 2 ein Diagramm einer Lichtmodulationseinrichtung gemäß einem illustrativen Beispiel, das nicht der vorliegenden Erfindung entspricht,
Figur 3A ein Diagramm einer Lichtmodulationseinrichtung gemäß einem Ausführungsbeispiel,
Figur 3B eine Abwandlung der Lichtmodulationseinrichtung der Figur 3A,
Figur 4 ein Diagramm einer Lichtmodulationseinrichtung gemäß einem weiteren Ausführungsbeispiel,
Figur 5 ein Diagramm einer Lichtmodulationseinrichtung gemäß einem weiteren Ausführungsbeispiel,
Figur 6 ein Flussdiagramm zur Veranschaulichung eines Verfahrens gemäß einem Ausführungsbeispiel, und
Figur 7 ein Blockdiagramm einer optischen Vorrichtung gemäß einem Ausführungsbeispiel.

Im Folgenden werden verschiedene Ausführungsbeispiele der vorliegenden Erfindung detailliert erläutert. Diese Ausführungsbeispiele dienen lediglich der Veranschaulichung und sind nicht als einschränkend auszulegen. Insbesondere ist eine Beschreibung von Ausführungsbeispielen mit einer Vielzahl von Elementen nicht dahingehend auszulegen, dass alle diese Elemente zur Implementierung von Ausführungsbeispielen notwendig sind. Vielmehr können andere Ausführungsbeispiele weniger Elemente und/oder alternative Elemente aufweisen. Zudem können zusätzlich zu den dargestellten Elementen weitere Elemente, beispielsweise herkömmlicherweise in optischen Anordnungen verwendete Elemente, bereitgestellt sein. Elemente verschiedener Ausführungsbeispiele können miteinander kombiniert werden, sofern nichts anderes angegeben ist. Variationen, Abwandlungen und Details, welche für eines der Ausführungsbeispiele beschrieben werden, können auch auf andere Ausführungsbeispiele anwendbar sein.

Die im Folgenden diskutierten Ausführungsbeispiele umfassen räumliche Lichtmodulatoren. Unter einem räumlichen Lichtmodulator ist eine insbesondere einstückig ausgebildete Einrichtung zu verstehen, bei welchem Licht, welches auf verschiedene Stellen des räumlichen Lichtmodulators fällt, auf verschiedene Weise moduliert werden kann. Derartige räumliche Lichtmodulatoren können innerhalb ihrer Ausdehnung translationsinvariant aufgebaut sein, d.h. sie können aus einer Vielzahl von gleichartigen Elementen bestehen, welche zueinander versetzt angeordnet sind. Der Begriff räumlicher Lichtmodulator wird dabei im Rahmen dieser Anmeldung sowohl für räumliche Lichtmodulatoren verwendet, welche eine Phasenmodulation vornehmen, als auch für räumliche Lichtmodulatoren, welche eine Amplitude des Lichts modulieren, sowie Kombinationen hiervon. Lichtmodulatoren, welche die Phase modulieren, können beispielsweise basierend auf Flüssigkristallen aufgebaut sein, beispielsweise sogenannte LCOS-SLM (liquid crystal on silicon spatial light modulator). Ein Beispiel für einen räumlichen Lichtmodulator, welcher die Amplitude moduliert, ist eine digitale Mikrospiegelanordnung (DMD, vom Englischen "digital micromirror device"). Im Rahmen der vorliegenden Erfindung können jedoch auch andere Arten von räumlichen Lichtmodulatoren verwendet werden.

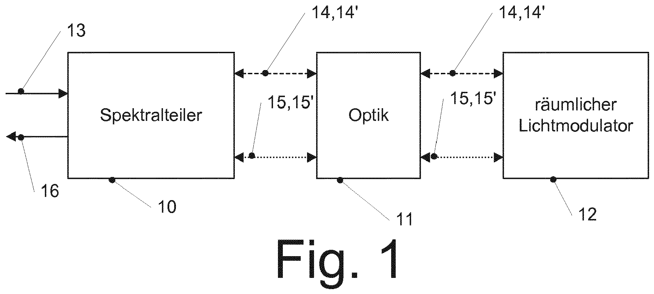

In Figur 1 ist ein Blockdiagramm zur Veranschaulichung der prinzipiellen Funktionsweise von verschiedenen Ausführungsbeispielen dargestellt. Bei dem Ausführungsbeispiel der Figur 1 wird ein Lichtstrahl 13 auf einen Spektralteiler 10 gelenkt. Der Spektralteiler 10 spaltet den Lichtstrahl 13 in mindestens zwei unterschiedliche Teillichtstrahlen mit verschiedenen Spektralbereichen (d.h. Komponenten mit unterschiedlichen Wellenlängenbereichen) 14 und 15 auf, welche durch eine Optik 11 zu verschiedenen Orten eines räumlichen Lichtmodulators 12 gelenkt werden. Zu beachten ist, dass ein Spektralbereich für die einzelnen Teillichtstrahlen sowohl ein schmalbandiger Spektralbereich (beispielsweise im Wesentlichen eine einzige Wellenlänge) oder auch ein breiterer Spektralbereich, welcher ein Intervall von Wellenlängen beinhaltet, sein kann.

Da die Teillichtstrahlen 14, 15 an verschiedenen Orten auf den räumlichen Lichtmodulator 12 fallen, können sie auf verschiedene Weise (durch Ansteuern entsprechender Teile des räumlichen Lichtmodulators) moduliert werden. Von dem räumlichen Lichtmodulator werden die so modulierten Teillichtstrahlen 14', 15' über die Optik 11 zurück zu dem Spektralteiler 10 gelenkt, wo sie zu einem einzigen Ausgangsstrahl 16 vereinigt werden. Die Optik 11 kann hierzu verschiedene optische Elemente wie zum Beispiel Linsen und/oder Spiegel umfassen. Zudem kann die Optik 11 Elemente enthalten, welche sicherstellen, dass eine optische Weglänge für den Teillichtstrahl 14, 14' gleich ist einer Weglänge für die Komponente 15, 15'. Hierzu kann beispielsweise einfach einer der Teillichtstrahlen 14, 14' oder 15, 15' durch ein geeignetes Material mit einem anderen Brechungsindex als Luft gelenkt werden, um die optischen Weglängen einander anzugleichen.

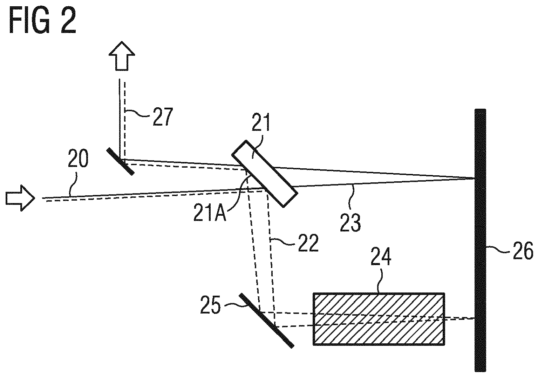

Mit einem Aufbau wie in Figur 1 dargestellt, kann eine einfache Modulierung verschiedener Spektralanteile des Lichtstrahls 13 erfolgen. Insbesondere wird nur ein einziger räumlicher Lichtmodulator und ein Strahlteiler sowie die Optik 11 benötigt. Im Folgenden werden nunmehr unter Bezugnahme auf die Figuren 2 bis 5 Implementierungsmöglichkeiten hierfür beschrieben.

Die Figur 2 zeigt eine Modulationseinrichtung gemäß einem nicht erfindungsgemäßen illustrativen Beispiel. Sie umfasst als Spektralteiler einen Dichroiden 21, welcher auf einer Seite 21A beispielsweise eine dichroitische Beschichtung aufweist, welche von einem einfallenden Lichtstrahl 20 einen ersten Teillichtstrahl 22 in einem ersten Spektralbereich reflektiert und einen zweiten Teillichtstrahl 23 in einem zweiten Spektralbereich durchlässt. Der Dichroid 21 kann in für sich genommen bekannter Weise als Dünnschichtinterferenzfilter oder anderes Interferometer ausgestaltet sein. Der zweite Teillichtstrahl 23 gelangt an einem ersten Ort auf einen räumlichen Lichtmodulator 26, während der erste Teillichtstrahl 22 über einen Spiegel 25 an einen zweiten Ort des räumlichen Lichtmodulators 26 gelenkt wird, um dort jeweils moduliert zu werden. Die so unabhängig voneinander durch den räumlichen Lichtmodulator 26 modulierbaren Teillichtstrahlen gelangen im Wesentlichen über den umgekehrten Lichtweg wie dargestellt zurück zu dem Dichroiden 21 und werden zu einem Ausgangslichtstrahl 27 vereinigt und über einen Spiegel 28 ausgekoppelt. Der Dichroid 21 dient somit sowohl zum Aufteilen in Teillichtstrahlen als auch zum Vereinigen der Teillichtstrahlen.

Da bei dem dargestellten Beispiel die durch den ersten Teillichtstrahl 22 zurückgelegte Weglänge größer ist als die durch den zweiten Teillichtstrahl 23 zurückgelegte Weglänge, ist im Weg des ersten Teillichtstrahls 22 ein Element 24 zur Angleichung der optischen Weglängen, beispielsweise ein Glaselement, angeordnet.

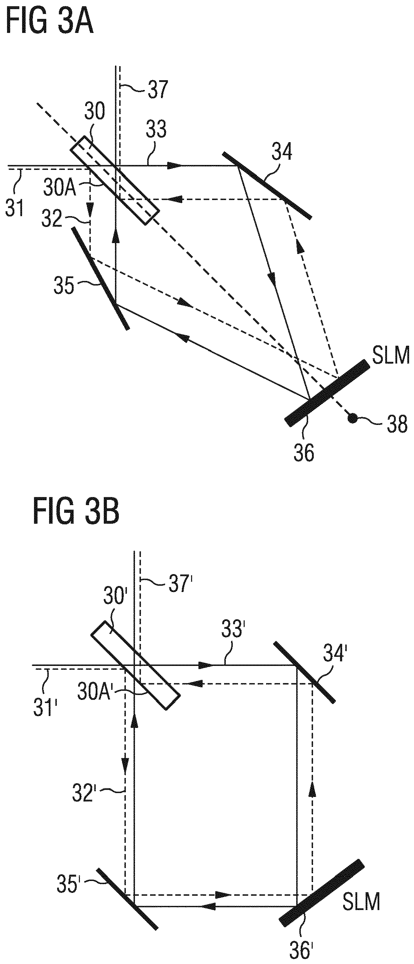

Ein Ausführungsbeispiel ist in Figur 3A dargestellt.

Bei dem Ausführungsbeispiel der Figur 3A trifft ein einfallender Lichtstrahl 31 auf einen Dichroiden 30, welcher ähnlich dem Dichroiden 21 der Figur 2 auf einer Seite 30A eine Beschichtung aufweist, welche den Lichtstrahl 31 in einen ersten Teillichtstrahl 32 in einem ersten Spektralbereich und einen zweiten Teillichtstrahl 33 in einen zweiten Spektralbereich aufspaltet. Der erste Teillichtstrahl 32 wird über einen Spiegel 35 zu einem ersten Ort auf einem räumlichen Lichtmodulator 36 gelenkt, und der zweite Teillichtstrahl 33 wird über einen Spiegel 34 zu einem zweiten Ort auf dem räumlichen Lichtmodulator 36 gelenkt. Der modulierte erste Teillichtstrahl wird dann über den Spiegel 34 zurück zu dem Dichroiden 30 gelenkt und dort mit dem modulierten zweiten Teillichtstrahl, welcher über den Spiegel 35 zu den Dichroiden 30 zurückgelenkt wird, zu einem Ausgangslichtstrahl 37 vereinigt.

Wie in Figur 3A ersichtlich, ist der Aufbau näherungsweise symmetrisch zu einer Achse 38, und der erste Teillichtstrahl 32 und der zweite Teillichtstrahl 33 durchlaufen die Anordnung in entgegengesetzter Richtung (im dargestellten Beispiel durchläuft der erste Teillichtstrahl 32 die Anordnung im Gegenuhrzeigersinn und der zweite Teillichtstrahl 33 im Uhrzeigersinn). Die Spiegel 34, 35 werden dabei sowohl zum Umlenken des ersten Teillichtstrahls als auch zum Umlenken des zweiten Teillichtstrahls verwendet. Im Wesentlichen symmetrisch kann dabei bedeuten, dass der Abstand der zueinander im Wesentlichen symmetrischen Spiegel 34, 35 von der Achse 38 sich um nicht mehr als 20%, z.B. um nicht mehr als 10%, unterscheidet, und/oder die Ausrichtung der Spiegel 34, 35 mit einer Abweichung von nicht mehr als +/- 15°, z.B. nicht mehr als +/- 10°, zueinander symmetrisch ist. Dabei bezieht sich die Symmetrieeigenschaft insbesondere auf optisch genutzte Teile der Spiegel, d.h. diejenigen Teile der spiegelnden Fläche, die auch tatsächlich genutzt werden. Bei anderen Ausführungsbeispielen kann "im Wesentlichen symmetrisch" "innerhalb der Fertigungstoleranzen symmetrisch" bedeuten.

Bei dem Ausführungsbeispiel der Figur 3A ist der optische Lichtweg des ersten Teillichtstrahls 32 gleich lang wie der optische Lichtweg des zweiten Teillichtstrahls 33. Zudem sind die Wege beider Teillichtstrahlen innerhalb des Dichroiden 30 gleich lang. Daher wird kein zusätzliches Element (wie das Element 24 der Figur 2) zum Ausgleich verschiedener optischer Weglängen benötigt. Zudem kann verglichen mit dem Ausführungsbeispiel der Figur 2 bei einer derartigen Implementierung gegebenenfalls der Ort, an dem der erste Teillichtstrahl 32 auf den räumlichen Lichtmodulator 36 trifft, näher an dem Ort liegen, an dem der zweite Teillichtstrahl 33 auf den räumlichen Lichtmodulator 36 fällt, so dass eine kleinere Bauweise des räumlichen Lichtmodulators 36 möglich ist. Dies kann z.B. zu einer Kostenersparnis führen. Auch werden beide Teillichtstrahlen von den gleichen bzw. einander entsprechenden optischen Elementen (z.B. den Spiegeln 34, 35) beeinflusst. Die Lichtwege der Teillichtstrahlen 32, 33 sind somit funktional identisch, in diesem Fall sogar im Wesentlichen sowohl vor als auch nach dem räumlichen Lichtmodulator funktional identisch.

Dies wird bei dem Ausführungsbeispiel der Fig. 3A mit einem im Wesentlichen symmetrischen Aufbau erreicht. Bei anderen Ausführungsbeispielen kann der Aufbau auch unsymmetrisch sein, wobei die Lichtwege der Lichtstrahlen nach wie vor funktional identisch sein können. Die Figur 3B zeigt als Beispiel hierfür eine Abwandlung des Ausführungsbeispiels der Figur 3A. Die Figuren 3A und 3B unterscheiden sich lediglich in der Anordnung der Komponenten, und einander entsprechende Komponenten sind mit den gleichen Bezugszeichen, in Fig. 3B ergänzt durch einen ' (z.B. 34 in Figur 3A und 34' ind Figur 3B) gekennzeichnet. In Figur 3B sind der Dichroid 30', die Spiegel 34', 35' und der räumliche Lichtmodulator 36' im Wesentlichen in einem Rechteck angeordnet, wobei die Lichtwege der Teillichtstrahlen 32', 33' wie in der Figur 3A (bis auf eine möglicherweise unterschiedliche Beeinflussung durch den Lichtmodulator 36') funktional identisch sind. Es sind auch andere unsymmetrisch Anordnungen als die in Figur 3B dargestellte möglich.

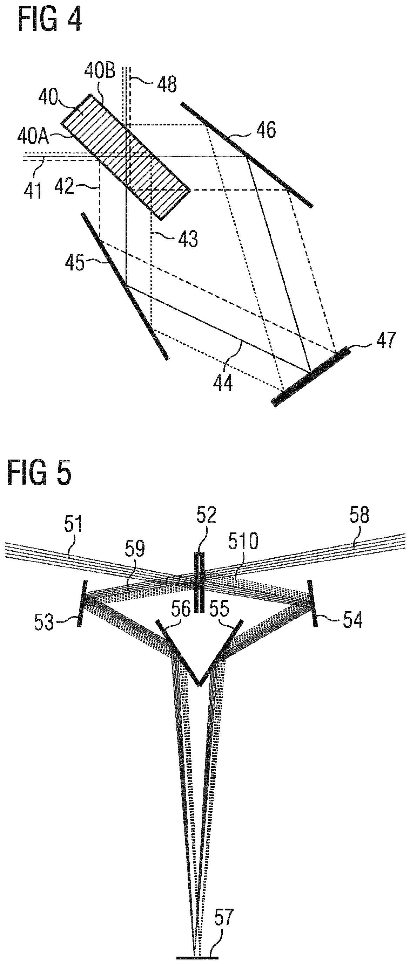

Bei dem Beispiel und den Ausführungsbeispielen der Figuren 2 und 3A, 3B wird ein einfallender Lichtstrahl in zwei spektral unterschiedliche Teillichtstrahlen aufgeteilt. Es ist jedoch auch eine Aufteilung in drei oder mehr Teillichtstrahlen möglich. In Figur 4 ist ein Ausführungsbeispiel dargestellt, bei welchem ein Eingangsstrahl 41 in drei Teillichtstrahlen 42 bis 44 aufgeteilt wird. Der grundsätzliche Aufbau des Ausführungsbeispiels der Figur 4 entspricht dem Ausführungsbeispiel der Figur 3A. Insbesondere entspricht ein Spiegel 45 der Figur 4 im Wesentlichen dem Spiegel 35 der Figur 3A, ein Spiegel 46 der Figur 4 entspricht im Wesentlichen dem Spiegel 34 der Figur 3A, und ein räumlicher Lichtmodulator 47 des Ausführungsbeispiels der Figur 4 entspricht im Wesentlichen dem räumlichen Lichtmodulator 36 der Figur 3A. Im Gegensatz zu dem als Spektralteiler dienenden dichroiden 30 der Figur 3A weist die Figur 4 einen dichroiden Spektralteiler auf, welcher den einfallenden Lichtstrahl 41 in die drei Teillichtstrahlen 42, 43, 44 mit verschiedenen Spektralbereichen aufteilt.

Hierzu weist der Dichroid 40 auf einer ersten Seite 40A eine erste Beschichtung auf, die einen Spektralbereich entsprechend dem ersten Teillichtstrahl 42 reflektiert und Spektralbereiche entsprechend dem zweiten Teillichtstrahl 43 und dem dritten Teillichtstrahl 44 durchlässt. Auf der zweiten Seite 40B weist der Dichroid 40 eine Beschichtung auf, welche Licht entsprechend einem Spektralbereich des zweiten Teillichtstrahls 43 reflektiert und ansonsten Licht (beispielsweise entsprechend der Spektralbereiche des ersten Teillichtstrahls 42 und des dritten Teillichtstrahls 44) durchlässt. Hierdurch werden wie aus Figur 4 ersichtlich der erste Teillichtstrahl 42, der zweite Teillichtstrahl 43 und der dritte Teillichtstrahl 44 zu drei verschiedenen Orten des räumlichen Lichtmodulators 47 gelenkt und können dort getrennt beispielsweise hinsichtlich ihrer Phase und/oder ihrer Amplitude moduliert werden. Wie dargestellt werden die Strahlen dann auch von dem Dichroiden 40 wieder zu einem Ausgangslichtstrahl 48 vereinigt. Wie ebenfalls aus Figur 4 ersichtlicht, ist die zurückgelegte optische Weglänge für alle Teillichtstrahlen 42, 43, 44 gleich, so dass auch bei diesem Ausführungsbeispiel keine zusätzlichen Komponenten (wie beispielsweise das Element 24 der Figur 2) zum Ausgleichen von Unterschieden der optischen Weglängen benötigt wird. Auch hier sind die Lichtwege der Teillichtstrahlen funktional identisch. Auch wenn Figur 4 eine im Wesentlichen symmetrische Anordnung ähnlich der Figur 3A zeigt, ist auch hier eine unsymmetrische Anordnung z.B. entsprechend der Figur 3B ebenso möglich.

Dabei durchlaufen bei der Vorrichtung der Figur 4 der erste Teillichtstrahl 42 und der zweite Teillichtstrahl 43 die Vorrichtung entgegen dem Uhrzeigersinn, und der dritte Teillichtstrahl 44 durchläuft die Vorrichtung entgegen dem Uhrzeigersinn.

Somit haben bei den Ausführungsbeispielen der Figuren 3 und 4 - möglicherweise bis auf eine beabsichtigte Phasenmanipulation durch den räumlichen Lichtmodulator 36 oder 47 - alle Teillichtstrahlen den gleichen optischen Weg durchlaufen.

Zu bemerken ist, dass auch mehr als drei Teillichtstrahlen möglich sind. Hierzu können beispielsweise mehrere Spektralteiler hintereinander geschaltet werden, um so im Wesentlichen beliebig viele Einzelstrahlen zu erzeugen, welche dann zu verschiedenen Orten auf einem räumlichen Lichtmodulator gelenkt werden, dort hinsichtlich Phase und/oder Amplitude manipuliert werden und dann wieder zusammengeführt werden.

Ein weiteres Ausführungsbeispiel ist in Figur 5 dargestellt. Bei dem Ausführungsbeispiel der Figur 5 wird ähnlich wie bei dem Ausführungsbeispiel der Figur 3A ein eingehender Lichtstrahl 51 mittels eines Spektralteilers 52 in einen ersten Teillichtstrahl 59 und einen zweiten Teillichtstrahl 510 geteilt. Der Spektralteiler 52 kann dabei im Wesentlichen wie der Dichroid 30 der Figur 3A implementiert sein. Der erste Teillichtstrahl 59 und der zweite Teillichtstrahl 510 werden dann zu verschiedenen Orten auf einem räumlichen Lichtmodulator 57 gelenkt und schließlich im Spektralteiler 52 wieder zu einem Ausgangslichtstrahl 58 vereinigt, wobei der erste Teillichtstrahl 59 die Vorrichtung entgegen dem Uhrzeigersinn und der zweite Teillichtstrahl 510 die Vorrichtung im Uhrzeigersinn durchläuft.

Zum Lenken der Teillichtstrahlen 59, 510 umfasst die Vorrichtung der Figur 5 vier Spiegel 53, 54, 55 und 56, welche wie dargestellt angeordnet sind. Die Anordnung ist insbesondere wiederum näherungsweise symmetrisch zu einer Achse durch den Spektralteiler 52 und den räumlichen Lichtmodulator 57. Bei dem Ausführungsbeispiel der Figur 5 sind die Spiegel 53 bis 56 derart angeordnet, dass die Einfallswinkel der Strahlen (wie in der Optik üblich gemessen zum Lot) auf dem Spektralteiler 52 und/oder dem räumlichen Lichtmodulator 57 kleiner sind als beispielsweise bei den Ausführungsbeispielen der Figuren 3 und 4. Beispielsweise können mit dem Ausführungsbeispiel der Figur 5 Einfallswinkel auf dem Spektralteiler 52 und/oder dem räumlichen Lichtmodulator 57 kleiner 20°, bevorzugt kleiner 10° erreicht werden. Dies kann beispielsweise die Effizienz des Spektralteilers 52 je nach verwendeter Beschichtung erhöhen, was insbesondere bei kleiner Signalstärke bei manchen Anwendungen wichtig sein kann.

Auch bei der Figur 5 sind auch unsymmetrische Anordnungen möglich, wobei hier bedingt durch die höhere Anzahl an Spiegeln noch mehr Freiheiten in der Anordnung bestehen, während nach wie vor funktional identische Lichtwege für die Teillichtstrahlen erreichbar sind.

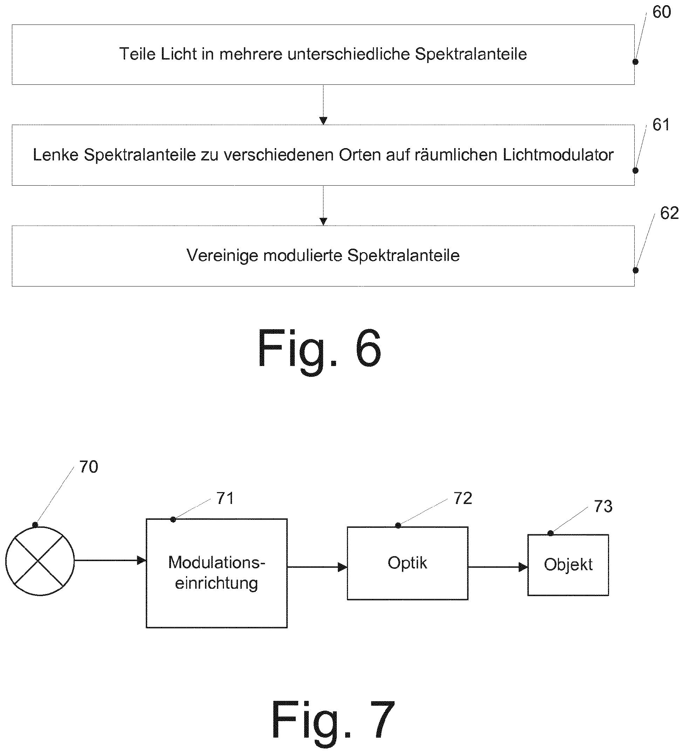

Figur 6 zeigt ein Flussdiagramm eines Verfahrens gemäß einem Ausführungsbeispiel. Das Verfahren der Figur 6 kann mittels der unter Bezugnahme auf die Figuren 1 bis 5 diskutierten Vorrichtungen implementiert werden, kann jedoch auch unabhängig hiervon implementiert werden.

In Schritt 60 wird ein Lichtstrahl in mehrere Teillichtstrahlen mit unterschiedlichen Spektralanteilen aufgeteilt, beispielsweise mittels eines Dichroiden. In Schritt 61 werden die unterschiedlichen Teillichtstrahlen zu verschiedenen Orten auf einem räumlichen Lichtmodulator gelenkt und dort moduliert. In Schritt 62 werden die modulierten Teillichtstrahlen schließlich wieder vereinigt, um einen Ausgangslichtstrahl zu bilden.

Vorrichtungen und Verfahren wie unter Bezugnahme auf die Figuren 1 bis 6 diskutiert, können bei verschiedenen Anwendungen benutzt werden. Ein Anwendungsbeispiel ist die multispektrale Beleuchtung von Objekten beispielsweise für die Mikroskopie. Ein vereinfachtes Beispiel ist in Figur 7 dargestellt.

Bei dem Ausführungsbeispiel der Figur 7 erzeugt eine Lichtquelle 70 einen Lichtstrahl, welcher sich über einen breiteren Spektralbereich erstreckt. Die Art des Lichtstrahls hängt von der jeweiligen Anwendung ab. Die Lichtquelle 70 kann beispielsweise eine Weißlichtlampe, aber auch eine andere Lichtquelle, welche Licht in gewünschten Spektralbereichen emittiert, sein. Hierzu können auch mehrere Leuchtmittel kombiniert werden, beispielsweise mehrere Leuchtmittel verschiedener Farben.

Das von der Lichtquelle 70 erzeugte Licht wird einer Modulationseinrichtung 71 zugeführt, welche wie unter Bezugnahme auf die Figuren 1 bis 5 erläutert ausgestaltet sein kann. Hier wird das Licht mittels eines räumlichen Lichtmodulators hinsichtlich Amplitude und/oder Phase moduliert, wobei mindestens zwei verschiedene Spektralanteile unabhängig voneinander moduliert werden können. Der so modulierte Lichtstrahl wird dann über eine Optik 72 auf ein Objekt 73 gelenkt. Die Optik 72 kann hierzu beispielsweise Linsen oder Spiegel umfassen. Das Objekt 73 kann dann beispielsweise mittels eines (nicht dargestellten) Mikroskopobjektivs betrachtet werden. In diesem Falle wäre die dargestellte Beleuchtungseinrichtung eine Beleuchtungseinrichtung für ein Mikroskop.

Eine spezielle Anwendung dieser einer derartigen Beleuchtungseinrichtung ist eine Strahlformung für die Lichtblattmikroskopie, auch als Lichtscheibenmikroskopie bezeichnet. Beispielsweise kann insbesondere durch eine Modulation der Phase verschiedener Spektralanteile ein Bessel-Strahl oder ein Mathieu-Strahl gebildet werden. Auch andere gewünschte Strahlformen (d.h. Strahlprofile) können erreicht werden. Herkömmlicherweise kann dies durch eine Axikonphase oder ein binäres Gitter geschehen. Hierbei ist jedoch die Phase (Axikonphase; d.h. der Winkel der Kegelphase eines verwendeten Axikons) oder auch die Gitterkonstante des binären Gitters für eine bestimmte Wellenlänge ausgelegt. Wenn Licht einer anderen Wellenlänge verwendet wird, für die das Axikon oder das Gitter nicht genau ausgelegt sind, dann ändern sich Beugungseffizienzen, und der Strahl wird nicht mehr optimal geformt. Dies würde beispielsweise in der Lichtblattmikroskopie zu Auflösungsverlusten führen.

Durch die Verwendung einer Beleuchtungseinrichtung wie in Figur 7 gezeigt mit einer erfindungsgemäßen Modulationseinrichtung wie oben besprochen kann die Lichtblattmikroskopie dann mit einer einzigen Modulationseinrichtung auch mit zwei, drei oder mehreren Wellenlängen gleichzeitig ohne Qualitätsverluste betrieben werden.

Eine andere Anwendungsmöglichkeit ist eine unterschiedliche Manipulation von einem Beleuchtungsstrahl und einem detektieren Lichtstrahl beispielsweise bei der Fluoreszenzmikroskopie. Bei der Fluoreszenzmikroskopie weisen Beleuchtungsstrahl und detektiertes Licht durch die Stokes-Verschiebung im Allgemeinen unterschiedliche Wellenlängen auf. Zudem kann das Detektionslicht ein ganzes Spektrum unterschiedlicher Wellenlängen beinhalten. Bei vielen Fluoreszenzmikroskopen weisen detektiertes Licht und Beleuchtungslichtstrahl einen teilweise gemeinsamen Strahlengang auf. Beleuchtungsmanipulationen dieser Strahlen hinsichtlich Beleuchtung und Phase können mit den oben diskutierten Vorrichtungen im gemeinsamen Strahlengang getrennt am Beleuchtungslicht und am Detektionslicht vorgenommen werden.

Diese Anwendungsmöglichkeiten stellen lediglich Beispiele dar, und die diskutierten Vorrichtungen und Verfahren können immer zum Einsatz kommen, wenn Licht in verschiedenen Spektralbereichen unterschiedlich hinsichtlich Amplitude und/oder Phase moduliert werden soll. Die obigen Ausführungsbeispiele dienen lediglich der Veranschaulichung und sind nicht als einschränkend auszulegen.

## Patentansprüche

1. Modulationseinrichtung zum Modulieren eines Lichtstrahls, umfassend:
einen Spektralteiler (10; 30; 40; 52) zum Aufteilen eines Eingangslichtstrahls (13; 20; 31; 41; 51) in mindestens zwei Teillichtstrahlen (14, 15; 32, 33; 42, 43, 44; 59, 510) mit unterschiedlichen Spektralbereichen,
einen räumlichen Lichtmodulator (12; 36; 47; 57),
eine Optik (11; 34, 35; 45, 46; 53-56) zum Lenken der mindestens zwei Teillichtstrahlen (14, 15; 22, 32, 33; 42, 43, 44; 59, 510) zu unterschiedlichen Orten des räumlichen Lichtmodulators (12; 36; 47; 57),
wobei der räumliche Lichtmodulator eingerichtet ist, die mindestens zwei Teillichtstrahlen (14, 15; 22, 32, 33; 42, 43, 44; 59, 510) zu modulieren,
wobei die Optik (11; 34, 35; 45, 46; 53-56) weiter zum Lenken der mindestens zwei Teillichtstrahlen nach dem Modulieren von dem räumlichen Lichtmodulator (12; 36; 47; 57) zu dem Spektralteiler (10; 30; 40; 52) eingerichtet ist, wobei der Spektralteiler (10; 30; 40; 52) weiter eingerichtet ist, die mindestens zwei Teillichtstrahlen nach dem Modulieren zu einem Ausgangslichtstrahl (16; 37; 48; 58) zu vereinigen, **dadurch gekennzeichnet, dass** mindestens zwei der mindestens zwei Teillichtstrahlen die Modulationseinrichtung in zueinander entgegengesetzten Richtungen durchlaufen.

2. Modulationseinrichtung nach Anspruch 1, wobei der räumliche Lichtmodulator (12; 36; 47; 57) eingerichtet ist, Amplitude und/oder Phase für die mindestens zwei Teillichtstrahlen unabhängig voneinander zu modulieren.

3. Modulationseinrichtung nach Anspruch 1 oder 2, weiter umfassend eine Komponente zum Angleichen optischer Weglängen der mindestens zwei Teillichtstrahlen.

4. Modulationseinrichtung nach Anspruch 1 oder 2, wobei die Modulationseinrichtung derart eingerichtet ist, dass optische Weglängen für die mindestens zwei Teillichtstrahlen ohne Bereitstellung von Komponenten zum Ausgleich optischer Weglängen gleich sind.

5. Modulationseinrichtung nach einem der Ansprüche 1 bis 4, wobei die Optik Spiegel (34, 35; 45, 46; 53-56) umfasst, welche bezüglich einer Achse durch den Spektralteiler und den räumlichen Lichtmodulator derart im Wesentlichen symmetrisch angeordnet sind, dass ein Abstand der zueinander im Wesentlichen symmetrischen Spiegel von der Achse sich um nicht mehr als 20 % unterscheidet.

6. Modulationseinrichtung nach einem der Ansprüche 1 bis 5, wobei die Optik (11; 34, 35; 45, 46; 53-56) einen ersten Spiegel und einen zweiten Spiegel umfasst, wobei die mindestens zwei Teillichtstrahlen (14, 15; 32, 33; 42, 43, 44; 59, 510) einen ersten Teillichtstrahl und einen zweiten Teillichtstrahl umfassen, wobei der erste Spiegel angeordnet ist, den ersten Teillichtstrahl von dem Spektralteiler (10; 30; 40; 52) zu dem räumlichen Lichtmodulator (12; 36; 47; 57) zu lenken und den zweiten Teillichtstrahl nach der Modulation von dem räumlichen Lichtmodulator (12; 36; 47; 57) zu dem Spektralteiler (10; 30; 40; 52) zu lenken, wobei der zweite Spiegel angeordnet ist, den zweiten Teillichtstrahl von dem Spektralteiler (10; 30; 40; 52) zu dem räumlichen Lichtmodulator (12; 36; 47; 57) zu lenken und den ersten Teillichtstrahl nach der Modulation von dem räumlichen Lichtmodulator (12; 36; 47; 57) zu dem Spektralteiler (10; 30; 40; 52) zu lenken.

7. Modulationseinrichtung nach einem der Ansprüche 1 bis 6, wobei die Optik (53-56) so eingerichtet ist, dass ein Einfallswinkel der mindestens zwei Teillichtstrahlen auf dem räumlichen Lichtmodulator (57) und/oder auf dem Spektralteiler (52) kleiner als 20° ist.

8. Modulationseinrichtung nach einem der Ansprüche 1 bis 7, wobei der Spektralteiler einen dichroiden Spektralteiler umfasst.

9. Modulationseinrichtung nach Anspruch 8, wobei der Spektralteiler auf einer Seite (30A) eine dichroide Schicht aufweist, die Licht in einem Spektralbereich reflektiert und Licht außerhalb des Spektralbereichs durchlässt.

10. Modulationseinrichtung nach Anspruch 8, wobei der Spektralteiler eine erste dichroide Schicht auf einer ersten Seite (40A) und eine zweite dichroide Schicht auf einer zweiten Seite (40B) aufweist, wobei die erste dichroide Schicht in einem anderen Spektralbereich reflektiert als die zweite dichroide Schicht.

11. Modulationseinrichtung nach einem der Ansprüche 1 bis 10, wobei Lichtwege der mindestens zwei Teillichtstrahlen (32, 33; 42, 43, 44; 59, 510) abgesehen von der Modulation durch den räumlichen Lichtmodulator (36; 47; 57) funktional identisch sind.

12. Beleuchtungseinrichtung zum Beleuchten eines Objekts (73), umfassend eine Lichtquelle (70) und eine Modulationseinrichtung (71) nach einem der Ansprüche 1 bis 11.

13. Mikroskopvorrichtung mit einer Modulationseinrichtung nach einem der Ansprüche 1 bis 11 und/oder einer Beleuchtungseinrichtung nach Anspruch 12.

14. Verfahren zur Lichtmodulation, umfassend:
Teilen von Licht in mehrere Teillichtstrahlen mit unterschiedlichen Spektralanteilen,
Lenken der Teillichtstrahlen zu verschiedenen Orten auf einem räumlichen Lichtmodulator,
unabhängiges Modulieren der Teillichtstrahlen durch den räumlichen Lichtmodulator, und
Vereinigen der modulierten Teillichtstrahlen,
**dadurch gekennzeichnet, dass**
das Lenken der Teillichtstrahlen und das Vereinigen der Teillichtstrahlen derart erfolgt,
dass zumindest zwei der Teillichtstrahlen gegenläufige Lichtwege zurücklegen.

15. Verfahren nach Anspruch 14, wobei das Verfahren mit einer Modulationseinrichtung nach einem der Ansprüche 1 bis 11 durchgeführt wird.

## Claims

1. Modulation device for modulating a light beam, comprising:
a spectral splitter (10; 30; 40; 52) for splitting an input light beam (13; 20; 31; 41; 51) into at least two partial light beams (14, 15; 32, 33; 42, 43, 44; 59, 510) having different spectral ranges,
a spatial light modulator (12; 36; 47; 57), an optical unit (11; 34, 35; 45, 46; 53-56) for directing the at least two partial light beams (14, 15; 32, 33; 42, 43, 44; 59, 510) to different locations of the spatial light modulator (12; 36; 47; 57), wherein the spatial light modulator is designed to modulate the at least two partial light beams (14, 15; 32, 33; 42, 43, 44; 59, 510),
wherein the optical unit (11; 34, 35; 45, 46; 53-56) is further designed for directing the at least two partial light beams after modulation from the spatial light modulator (12; 36; 47; 57) to the spectral splitter (10; 30; 40; 52), wherein the spectral splitter (10; 30; 40; 52) is further designed to combine the at least two partial light beams after modulation to form an output light beam (16; 37; 48; 58),
**characterized in that**
at least two of the at least two partial light beams pass through the modulation device in mutually opposite directions.

2. Modulation device according to Claim 1, wherein the spatial light modulator (12; 36; 47; 57) is designed to modulate amplitude and/or phase for the at least two partial light beams independently of one another.

3. Modulation device according to Claim 1 or 2, further comprising a component for matching optical path lengths of the at least two partial light beams.

4. Modulation device according to Claim 1 or 2, wherein the modulation device is designed in such a way that optical path lengths for the at least two partial light beams are identical without provision of components for balancing optical path lengths.

5. Modulation device according to any of Claims 1 to 4, wherein the optical unit comprises mirrors (34, 35; 45, 46; 53-56) which are arranged substantially symmetrically relative to an axis through the spectral splitter and the spatial light modulator in such a way that a distance between the mutually substantially symmetrical mirrors and the axis differs by not more than 20%.

6. Modulation device according to any of Claims 1 to 5, wherein the optical unit (11; 34, 35; 45, 46; 53-56) comprises a first mirror and a second mirror, wherein the at least two partial light beams (14, 15; 32, 33; 42, 43, 44; 59, 510) comprise a first partial light beam and a second partial light beam, wherein the first mirror is arranged to direct the first partial light beam from the spectral splitter (10; 30; 40; 52) to the spatial light modulator (12; 36; 47; 57) and to direct the second partial light beam after modulation from the spatial light modulator (12; 36; 47; 57) to the spectral splitter (10; 30; 40; 52), wherein the second mirror is arranged to direct the second partial light beam from the spectral splitter (10; 30; 40; 52) to the spatial light modulator (12; 36; 47; 57) and to direct the first partial light beam after modulation from the spatial light modulator (12; 36; 47; 57) to the spectral splitter (10; 30; 40; 52).

7. Modulation device according to any of Claims 1 to 6, wherein the optical unit (53-56) is designed such that an angle of incidence of the at least two partial light beams on the spatial light modulator (57) and/or on the spectral splitter (52) is less than 20°.

8. Modulation device according to any of Claims 1 to 7, wherein the spectral splitter comprises a dichroic spectral splitter.

9. Modulation device according to Claim 8, wherein the spectral splitter has on a side (30A) a dichroic layer which reflects light in a spectral range and transmits light outside the spectral range.

10. Modulation device according to Claim 8, wherein the spectral splitter has a first dichroic layer on a first side (40A) and a second dichroic layer on a second side (40B), wherein the first dichroic layer reflects in a different spectral range from the second dichroic layer.

11. Modulation device according to any of Claims 1 to 10, wherein light paths of the at least two partial light beams (32, 33; 42, 43, 44; 59, 510) are functionally identical apart from the modulation by the spatial light modulator (36; 47; 57).

12. Illumination device for illuminating an object (73), comprising a light source (70) and a modulation device (71) according to any of Claims 1 to 11.

13. Microscope apparatus comprising a modulation device according to any of Claims 1 to 11 and/or an illumination device according to Claim 12.

14. Method for light modulation, comprising:
splitting light into a plurality of partial light beams having different spectral components,
directing the partial light beams to different locations on a spatial light modulator,
independently modulating the partial light beams by means of the spatial light modulator, and
combining the modulated partial light beams,
**characterized in that**
directing the partial light beams and combining the partial light beams are performed in such a way that at least two of the partial light beams cover light paths in opposite directions.

15. Method according to Claim 14, wherein the method is carried out with a modulation device according to any of Claims 1 to 11.

## Revendications

1. Dispositif de modulation destiné à moduler un rayon de lumière, comprenant :
un diviseur spectral (10 ; 30 ; 40 ; 52) destiné à diviser un rayon de lumière d'entrée (13 ; 20 ; 31 ; 41 ; 51) en au moins deux rayons de lumière partiels (14, 15 ; 32, 33 ; 42, 43, 44 ; 59, 510) ayant des plages spectrales différentes,
un modulateur de lumière spatial (12 ; 36 ; 47 ; 57), une optique (11 ; 34, 35 ; 45, 46 ; 53-56) destinée à diriger les au moins deux rayons de lumière partiels (14, 15 ; 32, 33 ; 42, 43, 44 ; 59, 510) vers des endroits différents du modulateur de lumière spatial (12 ; 36 ; 47 ; 57),
le modulateur de lumière spatial étant conçu pour moduler les au moins deux rayons de lumière partiels (14, 15 ; 32, 33 ; 42, 43, 44 ; 59, 510),
l'optique (11 ; 34, 35 ; 45, 46 ; 53-56) étant en outre conçue pour diriger les au moins deux rayons de lumière partiels après la modulation du modulateur de lumière spatial (12 ; 36 ; 47 ; 57) vers le diviseur spectral (10 ; 30 ; 40 ; 52), le diviseur spectral (10 ; 30 ; 40 ; 52) étant en outre conçu pour réduire les au moins deux rayons de lumière partiels après la modulation en un rayon de lumière de sortie (16 ; 37 ; 48 ; 58),
**caractérisé en ce que**
au moins deux des au moins deux rayons de lumière partiels traversent le dispositif de modulation dans des directions opposées l'une à l'autre.

2. Dispositif de modulation selon la revendication 1, le modulateur de lumière spatial (12 ; 36 ; 47 ; 57) étant conçu pour moduler l'amplitude et/ou la phase pour les au moins deux rayons de lumière partiels indépendamment l'un de l'autre.

3. Dispositif de modulation selon la revendication 1 ou 2, comprenant en outre un composant destiné à équilibrer les longueurs d'onde optiques des au moins deux rayons de lumière partiels.

4. Dispositif de modulation selon la revendication 1 ou 2, le dispositif de modulation étant conçu de telle sorte que les longueurs d'onde optiques pour les au moins deux rayons de lumière partiels sont identiques sans fournir de composants destinés à équilibrer les longueurs d'onde optiques.

5. Dispositif de modulation selon l'une des revendications 1 à 4, l'optique comportant des miroirs (34, 35 ; 45, 46 ; 53-56) qui sont disposés de manière sensiblement symétrique en référence à un axe à travers le diviseur spectral et le modulateur de lumière spatial de telle sorte qu'un écart entre les miroirs sensiblement symétriques entre eux et l'axe ne diffère pas de plus de 20 %.

6. Dispositif de modulation selon l'une des revendications 1 à 5, l'optique (11 ; 34, 35 ; 45, 46 ; 53-56) comportant un premier miroir et un deuxième miroir, les au moins deux rayons de lumière partiels (14, 15 ; 32, 33 ; 42, 43, 44 ; 59, 510) comportant un premier rayon de lumière partiel et un deuxième rayon de lumière partiel, le premier miroir étant disposé pour diriger le premier rayon de lumière partiel du diviseur spectral (10 ; 30 ; 40 ; 52) vers le modulateur de lumière spatial (12 ; 36 ; 47 ; 57) et diriger le deuxième rayon de lumière partiel, après la modulation, du modulateur de lumière spatial (12 ; 36 ; 47 ; 57) vers le diviseur spectral (10 ; 30 ; 40 ; 52), le deuxième miroir étant disposé pour diriger le deuxième rayon de lumière partiel du diviseur spectral (10 ; 30 ; 40 ; 52) vers le modulateur de lumière spatial (12 ; 36 ; 47 ; 57) et diriger le premier rayon de lumière partiel, après la modulation, du modulateur de lumière spatial (12 ; 36 ; 47 ; 57) vers le diviseur spectral (10 ; 30 ; 40 ; 52).

7. Dispositif de modulation selon l'une des revendications 1 à 6, l'optique (53-56) étant conçue de telle sorte qu'un angle d'incidence des au moins deux rayons de lumière partiels sur le modulateur de lumière spatial (57) et/ou sur le diviseur spectral (52) est inférieur à 20°.

8. Dispositif de modulation selon l'une des revendications 1 à 7, le diviseur spectral comportant un diviseur spectral dichroïde.

9. Dispositif de modulation selon la revendication 8, le diviseur spectral possédant une couche dichroïde sur un côté (30A), laquelle réfléchit la lumière dans une plage spectrale et laisse passer la lumière en-dehors de la plage spectrale.

10. Dispositif de modulation selon la revendication 8, le diviseur spectral possédant une première couche dichroïde sur un premier côté (40A) et une deuxième couche dichroïde sur un deuxième côté (40B), la première couche dichroïde réfléchissant dans une autre plage spectrale que la première couche dichroïde.

11. Dispositif de modulation selon l'une des revendications 1 à 10, les trajets de lumière des au moins deux rayons de lumière partiels (32, 33 ; 42, 43, 44 ; 59, 510) étant fonctionnellement identiques, à l'exception de la modulation à travers le modulateur de lumière spatial (36 ; 47 ; 57).

12. Dispositif d'éclairage destiné à éclairer un objet (73), comprenant une source de lumière (70) et un dispositif de modulation (71) selon l'une des revendications 1 à 11.

13. Arrangement de microscope comprenant un dispositif de modulation selon l'une des revendications 1 à 11 et/ou un dispositif d'éclairage selon la revendication 12.

14. Procédé de modulation de lumière, comprenant :
la division de la lumière en plusieurs rayons de lumière partiels ayant des parts spectrales différentes,
le guidage des rayons de lumière partiels vers différents endroits sur un modulateur de lumière spatial,
la modulation indépendante des rayons de lumière partiels par le modulateur de lumière spatial et la réunion des rayons de lumière partiels modulés,
**caractérisé en ce que**
le guidage des rayons de lumière partiels et la réunion des rayons de lumière partiels s'effectuent de telle sorte qu'au moins deux des rayons de lumière partiels parcourent des trajets de lumière opposés.

15. Procédé selon la revendication 14, le procédé étant mis en œuvre par un dispositif de modulation selon l'une des revendications 1 à 11.
